# EUROPEAN PATENT APPLICATION

(11) **EP 1 843 308 A1**
(43) Date of publication of application: **10.10.2007**
(21) Application number: 06075786.1
(22) Date of filing: 03.04.2006
(51) Int. Cl.: G08G 1/015, G01S 7/41, G08G 1/08

(54) **Sensor for a traffic response system and traffic control system using a sensor**

(71) Applicant: Nederlandse Organisatie voor Toegepast-Natuurwetenschappelijk Onderzoek TNO, 2628 VK Delft (NL)
(72) Inventor: Van Heijningen, Adrianus Willem Pieter, 2761 HC Zevenhuizen (NL); Kleijweg, Johannes Cornelis Maria, 2498 ZC Den Haag (NL)
(74) Representative: van Loon, C.J.J.

(57) **Abstract**

Traffic is sensed using a signal from a wave reflection detection device to classify road users into different types. Classification is performed dependent on statistical properties of reflections. Preferably reflections are resolved into reflections for different combinations of position and speed, and road users are classified, dependent on a size of spread resolved reflections for a cluster of combinations of position and speed for which reflection is detected.

## Description

The invention relates to a sensor for a traffic response system, to a method of sensing, to a traffic control system and a method of controlling traffic.

US patent application No US2005/0046597 discloses a traffic light signal system that uses an LFMCW radar (Linear Frequency Modulation Continuous Wave radar) as a sensor to detect vehicles. The document discloses applications such as keeping a crossing light red when the sensor detects a vehicle that is likely to drive through light that has just gone red (or will soon go red). Another application is extending the green period on detection of an approaching vehicle. Such applications can be implemented more cost effectively with a radar sensor than with conventional traffic sensors, such as induction loops incorporated in the road.

The disclosed system treats all vehicles in the same way, as automobiles. However, this imposes limitations on the usefulness of such a system. For example, a prediction of whether a vehicle will be able to observe a red light could be made more reliable if it is known whether the vehicle is a truck or a passenger car. Similarly, different responses may be required for passenger cars, cyclists, pedestrians, public transport etc.
From an article titled "Measuring human behaviour with Radar" by Philip van Dorp, TNO-FEL in the German Radar Symposium GRS 2000 Proceedings 11-12 October 2000, Berlin, Germany pages 423-429 is known that aspects of human motion can be measured using an LFMCM radar system.

Among others it is an object to provide for a cost-effective traffic sensor which enables differentiation of the response of a traffic response system based on type of road user.

According to the invention a radar signal is used to classify road users into different types using statistical properties of a radar signal. As used herein, the term "types" refers to classes of road users that are not merely distinguished by speed or location of the road user.

A traffic sensing apparatus according to claim 1 is provided. Herein statistical properties of reflections are used to distinguish between different types of road user. A traffic control circuit is provided that adapts traffic control actions, such as a time of switching a traffic light to or from red, on the type of one or more road users that has been detected.

In an embodiment the reflections are resolved into reflections for different combinations of position and speed. In this embodiment road users are classified dependent on a size of spread resolved reflections for a cluster of position and speed for which reflection is detected. This has been found to enable an effective classification. In a further embodiment said classification includes determining the size of spread as spread in speeds for which reflection has been detected at substantially a common distance from an antenna of the apparatus. The substantially common distance may for example be defined by a range of predetermined size (or road user type and/or speed dependent size) that includes all distances involved or by its presence in a cluster of distances for which detection is detected and which are not separated by more than a threshold separation.

Similarly the spread in distance or a combination of spread in distance and speed may be used. Preferably a frequency modulated continuous wave radar is used to resolve reflections in distance and speed. This has been found to be a cost effective and reliable way of classifying road users of different type.

These and other objects and advantageous aspects will become apparent from a description of exemplary embodiments, using the following figures.
- Figure 1: shows a traffic control system
- Figure 2: shows a LFMCW radar unit.
- Figure 3: illustrates LFMCW radar responses of different types of road user
- Figure 4a,b: illustrates a LFMCW radar response for a combination of road users

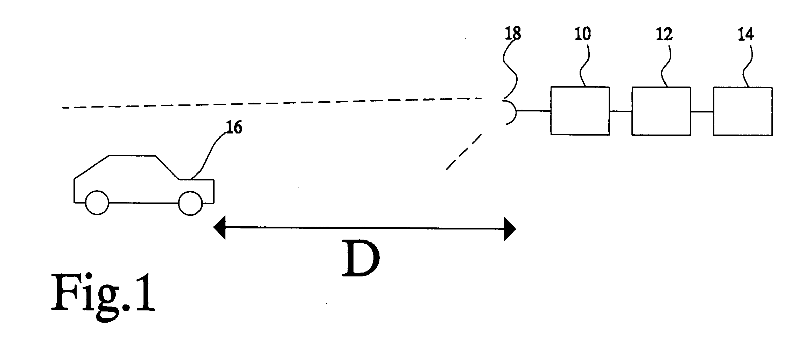

Figure 1 shows a system comprising a radar antenna 18, an LFMCW unit 10, a processor 12 and a traffic control apparatus 14 comprising for example a traffic light. A road user 16 is shown at a distance D from the antenna.

A LFMCW radar system as described in the cited article of Philip van Dorp provides for a signal that defines a complex number as a function of frequencies that correspond to position and speed of objects in view of the radar.

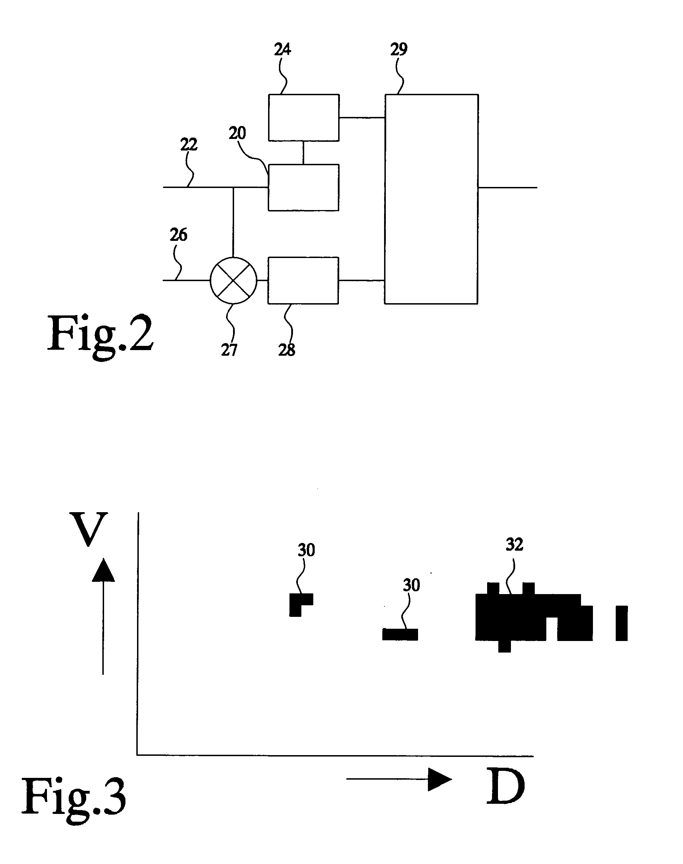

Figure 2 illustrates an example of a LFMCM radar unit comprising an oscillator 20, an output 22, a frequency sweep control circuit 24, an input 26, a mixer 27, a low pass filter 28 and a processing circuit 29. Input 26 and output 22 are each coupled to an antenna (not shown), typically to a common antenna (not shown). Oscillator 20 has an output coupled to output 22 and a first input of mixer 27 and a frequency control input coupled to frequency sweep control circuit 24. Input 26 is coupled to a second input of mixer 27, which has an output coupled to processing circuit 29 via low pass filter 28. Furthermore, processing circuit 29 is coupled to frequency sweep control circuit 24.

In operation frequency sweep control circuit 24 causes the oscillation frequency of oscillator 20 to be swept. A sweep with constant rate of frequency change, interrupted by returns to a base frequency may be used for example. Antenna 18 radiates electromagnetic waves induced by the signal from oscillator 20 along the length of a road. Radiation is reflected by road users 16 and reflected radiation is received back by antenna 18. The resulting antenna signal is applied to mixer 27 and downconverted by combination with the oscillator signal. Low pass filter 28 passes the downconverted signal to processing circuit 29.

Because the frequency is swept (changed as a function of time) and because it takes time for the radiation to travel from antenna 18 to road user 16 and back there will be a frequency difference between the signals from antenna 18 and oscillator 20 when they are mixed. The difference decreases with decreasing distance D. As a result reflections from road users 16 at different distances D will result in frequency components at different frequencies in the downconverted signal from low pass filter 28. In addition the difference may depend on Doppler shift, but with a suitable choice of the frequency rate of change the change of frequency due to doppler shift can be made small.

Processing circuit 29 analyzes the signal from low pass filter 28 to resolve reflections from different road users. Typically processing circuit analyzes the signal by means of digital processing, after analog to digital conversion of the low pass signal. In an embodiment processing circuit 29 selects successive time intervals, in each of which the transmitted frequency changes at a constant rate of change. The signal from low pass filter 28 is obtained for each time interval and Fourier transformed to obtain coefficients of a respective first Fourier transform of the signal in each time interval as a function of a first Fourier transform frequency. (As used herein, coefficients are the result of the Fourier Transform: they should not be confused with factors that are used to compute the Fourier transform). Next processing circuit 29 defines further signals, each corresponding to a respective one of the first Fourier transform frequencies. In each further signal successive signal values are taken from the coefficients of the first Fourier transform for successive time intervals, using coefficients for the first Fourier transform frequency to which the particular further signal corresponds. The further signals are Fourier transformed, resulting in coefficients of a second Fourier transform as a function of a second Fourier transform frequency.

The result is a set of Fourier transform coefficients as a function of two dimensions (the first and second Fourier transform frequencies) that correspond to distance from the antenna and speed relative to the antenna. The first Fourier frequency F1 related to distance by F1=2*DF*D/c, wherein DF is the rate of change of the transmission frequency, D is the distance and c is the propagation speed of the transmitted signal. The second Fourier frequency F1 related to speed V by F2=2*V/L, wherein L is the radiation wavelength. In the absence of reflecting objects the coefficients will be zero (or at least below a noise threshold). A reflecting object will result in coefficient that have larger amplitude in a range of first and second Fourier transform frequencies that correspond to distances and speeds of its surface parts.

These signals can be used to classify road users. For example, it has been found that pedestrians typically produce signals for a same distance from the radar antenna with a distribution of varying speeds at the same time and over the course of time. The torso causes a main reflection at a basic walking speed and the legs and feet typically cause reflections up to zero speed (foot on the ground) and up to about twice the basic speed (foot swinging forward). Cyclists have been also been found to produce signals with these a distribution of varying speeds at the same time and over the course of time, but with an average speed that is further from zero than for pedestrians and no zero speed components. Cars on the other hand have been found to produce signals with little or no spread in velocity for a position at a given time. Trucks have been found to give larger amplitudes of reflection for a position at a given distance than passenger cars, usually accompanied by lower amplitude reflections for a different position or a range of positions corresponding to the length of the truck if the truck is at a substantially horizontal distance and the height of the truck if the truck is at a substantially vertical distance from the antenna

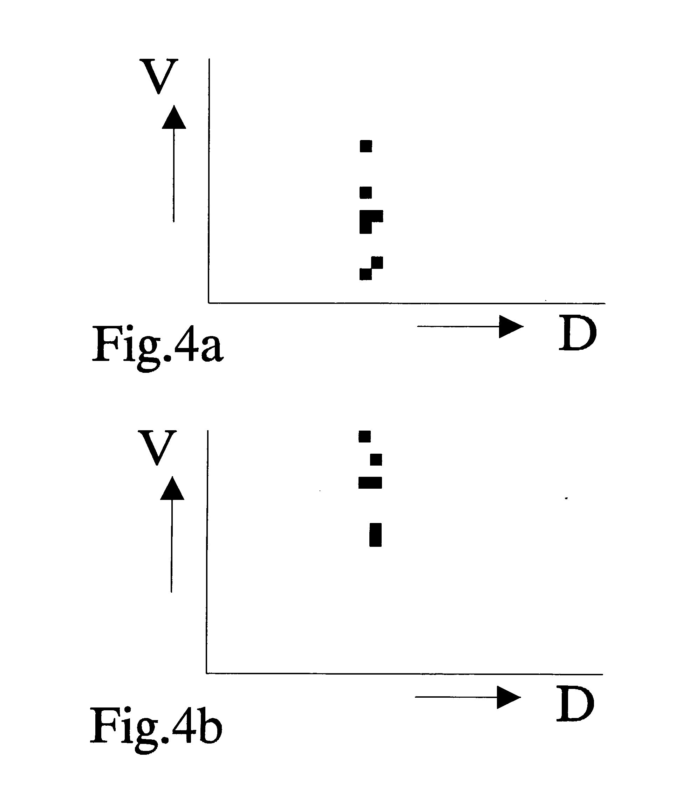

Figures 3 and 4 a,b illustrate hypothetical signals for different classes of road users, indicated by black squares for combinations of frequencies (corresponding to combinations of distance D and speed V) for which the amplitude of the coefficient is above a threshold that distinguishes from noise (zero speed coefficients having been eliminated because these do not distinguish from the road and other fixed obstacles). The size of the squares is exaggerated for the sake of illustration: preferably the Fourier transform frequencies are more closely spaced. Figure 3 shows clusters of such significant amplitudes for passenger cars 30, and for a truck 32. Figure 4a shows hypothetical significant amplitudes of coefficients for a pedestrian (zero speed component not shown). Figure 4b shows hypothetical significant amplitudes of coefficients for a cyclist.

The differences can be used to classify road users. For example in an embodiment processing apparatus 29 can compare an amplitude of a Fourier transform coefficient of a first reflection amplitude for a given distance with a distance dependent threshold to distinguish passenger cars and trucks. The required threshold may be determined by experiment. The distance dependence of the threshold corresponds to the distance dependence due to divergence of the radiated signal. Instead of using a distance dependent threshold, low pass filter 28 may be constructed to provide response with correspondingly increasing amplitude for increasing frequency (the filter being low pass in the sense that it does not pass the radiated frequencies or higher frequencies), or a frequency dependent multiplication may be performed elsewhere before comparison with the threshold.

Such a threshold based distinction can be verified by detecting whether there is at least an accompanying amplitude of the coefficients above a second (typically lower threshold) at the Fourier transform frequency for a different position within a range of distances relative to the distance of the first reflection amplitude, the range corresponding to the lengths of trucks.

Alternatively passenger cars and trucks may be distinguished based entirely on the range of distances (spread) for which they produce reflections. In one embodiment processing apparatus 29 compares the Fourier transform coefficients with a threshold to distinguish from noise and detects clusters of Fourier transform frequencies for which the coefficients are above this threshold. Techniques for computing clusters are known per se. Clusters are detected for example by gathering sets of distance-speed combinations that within a separation threshold from at least one other combination in the set and have a coefficient above the noise threshold. In this embodiment the spatial extent of such a cluster (extent along the first Fourier transform frequency dimension) can be compared to a further threshold to distinguish trucks from passenger cars.

In another embodiment the spread of measured distances can be computed as a variance. In a further embodiment processing circuit 29 detects a reflection peak for a distance and speed, defines a window around the position of this peak. A peak may be detected as a local maximum amplitude or simply as any point with amplitude above a threshold that distinguishes from noise. The window may have a predetermined range of speeds, positions and/or times of detection that excludes inclusion of a plurality of road users, or the window size in the distance dimension may be selected in predetermined proportion to the speed. In this embodiment processing circuit 29 computes a variance (sum of squares of distance deviations weighted by some measure of the reflection amplitude, e.g. by a weight of one or zero, dependent on whether the amplitude exceeds a threshold for a given distance, by a weight proportional to the amplitude or its square etc).

In another embodiment the distance of the nearest reflection when a road user passes under the antenna may be used to detect whether the road user is a truck or a passenger car. When the difference between the distance to the road and the nearest distance to the road user is above a predetermined threshold corresponding to at least more than a maximum height of passenger cars a truck is detected.

Tracking of detections over time may be used to remove false detections and/or to detect road users at standstill. Tracking as such is known. In an embodiment it involves repeating the computation of the coefficients as a function of the first and second Fourier transform frequencies for a number of successive times over a time period in which the position of the road users changes significantly. In the process of tracking coefficients with significant (higher than noise) amplitude for possibly different distance and speed for different times are associated with a common object if the distances and speeds at different times meet a consistency condition (i.e. that the change in distance between different times corresponds to the speed within a predetermined error margin, and/or the change of speed between different times is within a predetermined margin selected on the basis of mechanical feasibility of accelerations etc.). In a further embodiment the consistency condition is selected dependent on the classification of the object, accepting larger accelerations for example for passenger cars than longer vehicles such as trucks.

In an embodiment coefficients that cannot be associated with a consistent object at a plurality of time points during tracking are ignored during detection of vehicles and/or determination of spread.

In a further embodiment coefficients are eliminated as inconsistent if they are only part of an association with a consistent object that is interrupted during a time segment of more than a predetermined length during the tracking period, wherein there are no or less than a threshold number of consistent associations.

In another embodiment an object is established it can be consistently associated with reflections during a predetermined time interval and subsequently reflections for later time points that are consistent with that object are associated with the object. In this embodiment absence of such reflections after the initial time interval does not lead to elimination of the object detection.

In a further embodiment a form of tracking along a first road is used that takes account of a second road that forms an exit/entry to the first road at a known distance. In this embodiment the radar transmits radiation directed along the first road (road users on the second road being invisible to the radar and/or have no speed component in the direction of the antenna).

In this embodiment an object is eliminated after it has been established only if it passes out of range or if less than a threshold number of consistent reflections are detected after the time point when the object has reached the distance of the second road. Similarly, in an embodiment a new object is accepted only if it emerges at the edge of the range of the antenna or at the distance of the second road. In another embodiment association of an object with coefficients with significant amplitude is eliminated if the object cannot consistently be associated with significant coefficients for more than a time segment of predetermined length, unless the time segment starts or ends at a time point where the tracked distance has reached the distance of the second road within a predetermined error margin. Alternatively, in an embodiment wherein an association is eliminated when an object fails to be consistently associated with reflections for more than a threshold number of time points, separate, lower thresholds may be used before and after the time point where the tracked distance has reached the distance of the second road.

In another embodiment a similar method may be used in the case of road users that are obscured by other road users. In this case consistency is detected if the only time segments wherein a consistent association is absent occur in the company of detection of a further object at a smaller distance that explains the absence of reflections in the time segment. As another example the processing circuit 19 can measure a spread of measured speeds around a peak Fourier transform coefficient (e.g. in a window of predetermined range of speeds, positions and/or times of detection) for a given main distance from the antenna, for example by computing a variance (sum of squares of speed deviations weighted by the reflection amplitudes), and comparing the spread with a threshold. This can be used for example to distinguish cyclists and pedestrians from cars. Furthermore an average speed (e.g. sum of speeds weighted by the reflection amplitudes) can be computed and compared with a further threshold, or a standard deviation of the speed to distinguish cyclists and pedestrians.

Spread in speed can be determined in various ways, similar to the determination of spread in distance. In one embodiment processing apparatus 29 compares the Fourier transform coefficients with a threshold to distinguish from noise and detects clusters of Fourier transform frequencies for which the coefficients are above this threshold. In this embodiment the extent of speed of such a cluster (extent along the first Fourier transform frequency dimension) can be compared to a further threshold.

In a further embodiment pedestrians are detected using their characteristic spread, including zero speed, basic speed and double speed. In this embodiment processing circuit detects whether a reflection above a threshold for a basic speed is accompanied by a reflection above a further threshold in a range about twice the basic speed for a substantially common distance (e.g. for a cluster). If so the reflections are associated with a pedestrian. In another embodiment, wherein tracking is used, the torso may be tracked and subsequently a detection may be performed of reflections for twice the torso speed of the tracked torso.

In a further embodiment cyclists are detected using their characteristic spread, including a basic speed and satellite speeds with the same offset above and below the basic speed. In this embodiment processing circuit detects whether a reflection above a threshold for a basic speed is accompanied by reflections for a common distance with speeds at a same offset above and below the basic speed above a further threshold. If so the reflections are associated with a cyclist. In another embodiment, wherein tracking is used, the basic speed of the cyclist may be tracked first and subsequently a detection may be performed of reflections at satellites frequencies for speeds above and below the basic speed.

Tracking of spread etc. may also be used to confirm reliability of detections obtained at different time points.

The information about the type of road user may be used to adapt the operation of traffic lights, e.g. a longer time green being provided if there are more vehicles classified as trucks at a given time or over a preceding time period and less time if there are fewer such vehicles. Similarly the green time may be adapted to pedestrians or cyclists and/or their speed.

In another embodiment the traffic control system may be configured to control switching to a red traffic light dependent on the classification of the nearest road user. For example, the light may be kept green when the distance to the road user is less than a predetermined deceleration distance corresponding to a normal breaking distance for the classified type of road user, different type of road users having different predetermined deceleration distances. Alternatively the traffic control system may be constructed to keep a red light for crossing traffic red for a classification dependent time, for example for safety reasons if speed and distance of the classified road user is in a predetermined class dependent range that indicates that the road user is likely to cross a red light. Similarly green time may be adapted to pedestrians or cyclists and/or their speed.

Although an embodiment has been described that uses Fourier transforms and frequency modulation at a constant rate of frequency change, it should be appreciated that this is merely convenient, but not essential. Other techniques may be used. For example, instead of a Fourier transform a bank of filters may be used. As another example a different modulation characteristic may be used in combination with deconvolution or correlation to retrieve amplitudes for different distances and speeds.

The antenna is typically constructed to direct radiation in a single lane, at least for several tens of meters from the antenna, so that observations of vehicles in that lane can be detected. The antenna may be located over the lane. The antenna may be located to detect traffic that moves toward the antenna (next to a traffic light for example) or to detect traffic moving away from the antenna. In another embodiment the antenna may be mounted next to a lane, for example in a lighting mast.

In an embodiment, the amplitude of the signal edge when a road user disappears or appears under the antenna may be used to detect and classify the road user. In an embodiment, time between an initial onset of the signal at the nearest possible distance to the antenna due to a road user that passes under the antenna to the time of decay at that distance may be used to classify the road user. At a give speed a longer time corresponds to a longer vehicle. Also a distance of the tracked position of the feature that corresponds to the onset tracked to the time of drop off may be used to classify the road user, this also provides highly reliable information about the length. In the case of an antenna directed to detect traffic moving away from the antenna this can be used to provide an initial object classification for use during subsequent tracking.

The sensor apparatus may also be used in collision avoidance systems. Both in collision avoidance and traffic control, instead of an LFMCW apparatus another type of radar may be used, which provides speed (e.g. doppler) and distance (e.g. time of flight) information. But it has been found that LFMCW is particularly suitable. Preferably a relatively large frequency sweep (e.g. at least 100 MHz e.g. 300MHz) is used to provide high spatial resolution. Also, instead of a radar an acoustic or laser sensor may be used to detect reflections for different distances and speeds, after which similar processing may be performed as described in the preceding.

## Claims

**1.** A traffic sensing apparatus, comprising a wave reflection detection device and a processing circuit coupled to the wave reflection detection device, the processing circuit being configured to classify road users into different types, dependent on statistical properties of reflections.

**2.** A traffic sensing apparatus according to claim 1 wherein said types include a class of relatively larger cars and relatively smaller cars, the classification being performed dependent on a reflection amplitude for road users at a given distance from an antenna of the apparatus.

**3.** A traffic sensing apparatus according to claim 1 or 2, wherein the wave reflection detection device is configured to resolve reflections into reflections for different combinations of position and speed, the processing circuit being configured to classify road users, dependent on a size of spread resolved reflections for a cluster of position and speed for which reflection is detected.

**4.** A traffic sensing apparatus according to claim 3 wherein said classification includes determining the size of spread as spread in speeds for which reflection has been detected at substantially a common distance from an antenna of the apparatus.

**5.** A traffic sensing apparatus according to claim 4 wherein said classification includes determining an average speed of said reflection components for substantially a common distance and/or tracked speed from evolving distance from the antenna of the apparatus and using the average speed or tracked speed in combination with the spread to classify the object.

**6.** A traffic sensing apparatus according to claim 3 wherein said classification includes determining whether a reflection as a basic speed and substantially the common distance is accompanied by reflection in a range of speeds around or bordering on twice the basic speed at substantially the common distance.

**7.** A traffic sensing apparatus according to claim 3 wherein said classification includes determining whether a reflection as a basic speed and substantially the common distance is accompanied by satellite reflections at a same speed offset on mutually opposite sides of the basic speed at substantially the common distance.

**8.** A traffic sensing apparatus according to claim 6 or 7, wherein said basic speed is determined, or at least confirmed by tracking reflections for successive time points.

**9.** A traffic sensing apparatus according to claim 3 wherein said classification includes determining the size of spread of as spread in distances in a cluster of combinations of speed and distance for which reflection has been detected.

**11.** A traffic sensing apparatus according to any one of the preceding claims, wherein the processing circuit is configured to associate reflection detections for different time points to a common object, to verify a movement consistency condition for the reflections that are associated to the common object and to eliminate associations that do not meet the movement consistency condition.

**12.** A traffic sensing apparatus according to claim 11 wherein the movement consistency condition accounts for turning into and/or out of crossing roads into a lane monitored by the wave reflection detection device.

**13.** A traffic sensing apparatus according to any one of the preceding claims, wherein the wave reflection detection device comprises a frequency modulated continuous wave radar unit.

**14.** A traffic control system comprising a traffic light, a control units and an apparatus according to any one of the preceding claims, the control unit being configured to control the traffic lights dependent on the type of road user detected by said apparatus.

**15.** A method of sensing traffic, comprising using a signal from a wave reflection detection device to classify road users into different types, dependent on statistical properties of reflections

**16.** A method according to claim 15, comprising resolving reflections into reflections for different combinations of position and speed, and classifying road users, dependent on a size of spread resolved reflections for a cluster of combination of position and speed for which reflection is detected.

**17.** A method according to claim 15 or 16, comprising adapting operation of a traffic light dependent on the classification of at least one of the road users.

**18.** A computer program product comprising instructions, which when executed by a programmable processing circuit, cause the programmable processing circuit to perform the method of claim 15, 16 or 17.
